(19)

Europäisches Patentamt

European Patent Office

Office européen des brevets

(11) **EP 4 641 951 A1**

(12) **EUROPEAN PATENT APPLICATION**

(43) Date of publication:
**29.10.2025 Bulletin 2025/44**

(21) Application number: **24305644.7**

(22) Date of filing: **25.04.2024**

(51) International Patent Classification (IPC):
**H04B 10/70** (2013.01)      **H04L 9/08** (2006.01)
**H04L 27/34** (2006.01)

(52) Cooperative Patent Classification (CPC):
**H04L 9/0852; H04B 10/70; H04L 27/3488**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Nokia Solutions and Networks Oy
02610 Espoo (FI)**

(72) Inventors:
• **HONG, Yang**
  **91300 Massy (FR)**
• **GHAZISAEIDI, Amirhossein**
  **94240 L'Hays-les-Roses (FR)**
• **RENAUDIER, Jérémie**
  **91190 Gif-sur-Yvette (FR)**

(74) Representative: **Novagraaf Technologies
Bâtiment O2
2, rue Sarah Bernhardt
CS90017
92665 Asnières-sur-Seine Cedex (FR)**

(54) **PILOT MULTIPLEXING METHOD FOR ENHANCING THE SECRET KEY RATE OF CONTINUOUS-VARIABLE QUANTUM KEY DISTRIBUTION SYSTEMS**

(57)     A system, method, and signal provided, characterized by transmitting and receiving a stream of samples. On the transmitting side (Alice), generating a stream of samples for driving a transmitter, each sample having an in-phase (1) component and a quadrature (Q) component, wherein the stream of samples is generated from a stream of pilot symbols and a stream of QKD symbols, wherein the pilot symbols belong to an alphabet of M pilot symbols and the QKD symbols belong to an alphabet of N QKD symbols; mapping a pilot symbol of the stream of pilot symbols to a group of constellation points in accordance with a one-to-one mapping from the alphabet of M pilot symbols to M groups of constellation points in an I-Q space, wherein each of the M groups comprises N constellation points; and mapping a QKD symbol of the stream of QKD symbols to a constellation point in the I-Q space in accordance with a one-to-one mapping from the alphabet of N QKD symbols to the N constellation points of the group of constellation points to which the pilot symbol is mapped. On the receiving end, obtaining the stream of samples, the stream of samples representing a component of a received signal, each sample having an in-phase (1) component and a quadrature (Q) component; generating a stream of pilot symbols from the stream of samples, in accordance with a one-to-one mapping from M groups of constellation points in an I-Q space to an alphabet of M pilot symbols, wherein each of the M groups comprises N constellation points; and generating a stream of quantum key distribution (QKD) symbols from the stream of samples, in accordance with an M-to-one mapping from a set of M*N constellation points of the M groups to an alphabet of N QKD symbols, wherein the M-to-one mapping from the set of M*N constellation points to the alphabet of N QKD symbols comprises, for each respective group of the M groups, a one-to-one mapping from the N constellation points of the respective group to the alphabet of N QKD symbols.

FIG. 2(a)

**Description**

**TECHNOLOGICAL FIELD**

The present invention relates to optical communication, such as for example to optical quantum key distribution.

**BACKGROUND**

Quantum Key Distribution (QKD) is a secure communication method used in communication systems that require highly secure methods for exchanging cryptographic keys, such as communications between data centers, in secure communications networks, and in financial networks. A typical framework involves a transmitting side, called "Alice", and a receiver side, called "Bob", each of which are willing to produce a shared random key that will serve to generate a secret key in a cryptographic protocol. The random key information is transmitted as the quantum signal.

The security of QKD is based on the principles of quantum mechanics, particularly the Heisenberg uncertainty principle, which states that the act of measuring a quantum system disturbs it in an unpredictable way. Due to the principles of quantum mechanics, any attempt to eavesdrop on the transmission will inevitably disturb the quantum states being transmitted. This disturbance can be detected by Alice and Bob, indicating the presence of an eavesdropper, typically referred to as "Eve".

QKD exhibits provable security performance and does not rely on any assumptions of the computation capability of the eavesdropper (Eve). As such, it is widely considered as next-generation cryptography technology for secure optical communications.

As of today, there exist two approaches to implement QKD protocols: discrete variable QKD (DV-QKD) and continuous variable QKD (CV-QKD). DV-QKD enables the best performance at longer distances, yet its implementation is complicated, and requires expensive hardware components for single-photon detection, low ambient temperature for the receiver, as well as the associated dedicated control of the whole setup. In comparison, CV-QKD is closer to classical communication systems and can be implemented using off-the-shelf telecommunication equipment operating under realistic field conditions. Roumestan et al., "Demonstration of Probabilistic Constellation Shaping for Continuous Variable Quantum Key Distribution," Optical Fiber Communications Conference and Exhibition (OFC), paper F4E.1, 2021, describe a useful demonstration of CV-QKD using probabilistic-shaped QAM, the entire contents of which is hereby incorporated by reference.

In this framework, the random key data is encoded in the real and imaginary parts of the electric field of light that act like the position and momentum of a particle and transmitted as the quantum signal. The uncertainty principle applies to any in-phase or quadrature measurement performed by Eve, which guarantees an increase in the observed variance of Bob. Alice and Bob can track this variance back to the quality of Eve's measurement. This variance (i.e., the quality of Eve's measurement, if any) is directly linked to the quantity of leaked information to Eve by the Shannon theory.

Certain communications systems require a pilot signal, i.e., a reference signal, to be transmitted with data for physical layer synchronization, timing and carrier recovery purposes. Existing multiplexing schemes, such as time division (TDM), frequency division (FDM) and polarization division (PDM), allow the pilot signal and the quantum signal to be simultaneously transmitted from Alice to Bob. However, these multiplexing schemes sacrifice usable time/frequency/-polarization channel slots available for transmitting the quantum signal. Thus, the achievable secret key rate of the CV-QKD system is significantly reduced. For example, when one of the two orthogonal polarizations is used for pilot multiplexing, the quantum signal can only be transmitted through the other polarization, hence the resulting achievable secret key rate is halved. Similarly, 50% time slots are required to implement the time-division pilot multiplexing to minimize the excess noise, resulting in halved secret key rate as well.

The issue to be addressed by the present invention is to efficiently multiplex the pilot with quantum signal without occupying any time/frequency/polarization resource of the QKD system, thereby significantly increasing the secret key rate and/or extending the achievable reach of the quantum key exchange.

**SUMMARY**

The scope of protection sought for various embodiments of the invention is set out by the independent claims. The embodiments and features, if any, described in this Specification that do not fall under the scope of the independent claims are to be interpreted as examples useful for understanding various embodiments of the invention.

According to embodiments of the present invention, systems and methods for generating and transmitting the pilot and quantum signal are provided.

According to embodiments of the present invention, the pilot and quantum signal are generated from a stream of samples comprising pilot symbols and quantum symbols combined with complex multiplexing.

According to embodiments of the present invention, the pilot and quantum symbols are multiplexed in the power dimension.

According to embodiments of the present invention, a method is provided for receiving and generating a stream of quantum key distribution (QKD) symbols from a stream of samples. The method includes a step of obtaining the stream of samples. The stream of samples representing a component of a received signal, each sample having an in-phase (I) component and a quadrature (Q) component. The method includes a step of generating a stream of pilot symbols from the stream of samples, in accordance with a one-to-one mapping from M groups of constellation points in an I-Q space to an alphabet of M pilot symbols, wherein each of the M groups comprises N constellation points. The method includes a step of generating a stream of quantum key distribution (QKD) symbols from the stream of samples, in accordance with an M-to-one mapping from a set of M*N constellation points of the M groups to an alphabet of N QKD symbols, wherein the M-to-one mapping from the set of M*N constellation points to the alphabet of N QKD symbols comprises, for each respective group of the M groups, a one-to-one mapping from the N constellation points of the respective group to the alphabet of N QKD symbols.

According to embodiments of the present invention, any two constellation points of a same group among the M groups are closer to each other than any two constellation points of two different groups.

According to embodiments of the present invention, the method comprises carrier phase-and-frequency correction based on the pilot symbols.

According to embodiments of the present invention, generating the stream of QKD symbols may include, for each sample of the stream of samples: (*option 1*) equalizing the sample and shifting the equalized sample in the I-Q plane by subtracting a pilot offset from the equalized sample, or (*option 2*) shifting the sample in the I-Q plane by subtracting a pilot offset from the sample and equalizing the shifted sample.

According to embodiments of the present invention, generating a QKD data stream may be accomplished by performing forward error correction (FEC) decoding on the stream of QKD symbols.

According to embodiments of the present invention, the method further includes responding to the stream of QKD symbols in accordance with a QKD protocol that specifies communication between Alice and Bob.

According to embodiments of the present invention, M is at least 2, preferably, at least 4, and N is at least 2, more preferably at least 16, and even more preferably at least 64.

According to embodiments of the present invention, the stream of samples is obtained from a received signal, preferably, an optical signal.

According to embodiments of the present invention, polarization demultiplexing generates two streams of samples, one for each polarization. The aforementioned stream of samples may be one of these two streams, and decoding may be applied separately to each of the two streams.

According to embodiments of the present invention, the stream of samples may be an original stream of samples (e.g. 2 samples per symbol period) or a down-sampled stream of samples (e.g. 1 sample per symbol period).

According to embodiments of the present invention, Alice and Bob may be defined as two transceiver systems capable of communicating with each other in accordance with a QKD protocol, for generating a shared secret key.

According to embodiments of the present invention, the step of equalizing can be format-aware equalization.

According to embodiments of the present invention, each pilot symbol is modulated using simple modulation, preferably quadrature phase shift keying (QPSK), and each QKD symbol is modulated using a discrete Gaussian modulation format, preferably probabilistic constellation shaped quadrature amplitude modulation (PCS-QAM).

According to embodiments of the present invention, the power ratio between the pilot symbols and the QKD symbols is high.

According to embodiments of the present invention, the stream of samples may be described by the following formula:

$$s_{PowDM} = \sqrt{p_{pilot}} \times x_{pilot} + \sqrt{p_{quantum}} \times x_{quantum},$$

wherein $p_{pilot}$ is the power of the pilot symbol, $p_{quantum}$ is the power of the QKD symbol, $x_{pilot}$ is the M groups of constellation points, $x_{quantum}$ is the set of N constellation points, and $s_{PowDM}$ is the stream of samples.

According to embodiments of the present invention, a method is provided for generating a stream of samples for driving a transmitter. Each sample has an in-phase (I) component and a quadrature (Q) component, wherein the stream of samples is generated from a stream of pilot symbols and a stream of QKD symbols, wherein the pilot symbols belong to an alphabet of M pilot symbols and the QKD symbols belong to an alphabet of N QKD symbols. The method includes a step of mapping a pilot symbol of the stream of pilot symbols to a group of constellation points in accordance with a one-to-one mapping from the alphabet of M pilot symbols to M groups of constellation points in an I-Q space, wherein each of the M groups comprises N constellation points. The method also includes a step of mapping a QKD symbol of the stream of QKD symbols to a constellation point in the I-Q space in accordance with a one-to-one mapping from the alphabet of N QKD symbols to the N constellation points of the group of constellation points to which the pilot symbol is mapped.

According to embodiments of the present invention, any two constellation points of a same group among the M groups are closer to each other than any two constellation points of two different groups.

According to embodiments of the present invention, the method comprises quantum state preparation and stabilization of the stream of samples.

According to embodiments of the present invention, the method may further include a step of encoding the QKD data stream by performing error correction code on the stream of QKD symbols.

According to embodiments of the present invention, the method further includes a step of transmitting the stream of QKD symbols in accordance with a QKD protocol that specifies communication between Alice and Bob. In this application, "Alice" and "Bob" refer to two transceiver apparatuses, or two information processing devices, configured to communicate with each other to generate a shared secret key in accordance with a QKD protocol.

According to embodiments of the present invention, M is at least 2, preferably at least 4, and N is at least 2, preferably at least 16, and most preferably at least 64.

According to embodiments of the present invention, the stream of symbols is transmitted as a signal, preferably an optical signal.

According to embodiments of the present invention, the pilot symbol is modulated using simple modulation, preferably quadrature phase shift keying (QPSK), and the QKD symbol is modulated using a discrete Gaussian modulation format, preferably probabilistic constellation shaped quadrature amplitude modulation (PCS-QAM).

According to embodiments of the present invention, the power ratio between the pilot symbols and the QKD symbols is high.

According to embodiments of the present invention, the generated stream of samples may be described by the following formula:

$$s_{PowDM} = \sqrt{p_{pilot}} \times x_{pilot} + \sqrt{p_{quantum}} \times x_{quantum} ,$$

wherein $P_{pilot}$ is the power of the pilot symbol, $p_{quantum}$ is the power of the QKD symbol, $x_{pilot}$ is the M groups of constellation points, $x_{quantum}$ is the set of N constellation points, and $s_{PowDM}$ is the stream of samples.

According to embodiments of the present invention, a signal is provided by encoding for transmission the generated stream of samples according to any of embodiments herein.

In an embodiment, polarization demultiplexing generates two streams of samples, one for each polarization. The aforementioned "stream of samples" may be one of these two streams. The proposed method of decoding may be applied separately to each of the two streams. The stream of samples may be an original stream of samples (e.g. 2 samples per symbol period) or a down-sampled stream of samples (e.g. 1 sample per symbol period).

According to embodiments of the present invention, the system and methods utilize continuous variable QKD (CV-QKD).

According to embodiments of the present invention, the method is conducted by digital signal processing (DSP).

According to embodiments of the present invention, the systems and methods provide 100% increase in the secret key rate compared to prior art methods, without introducing any extra hardware to the system.

According to embodiments of the present invention, an apparatus includes processing circuitry configured to obtain a stream of samples, the stream of samples representing a component of a received signal, each sample having an in-phase (I) component and a quadrature (Q) component; generate a stream of pilot symbols from the stream of samples, in accordance with a one-to-one mapping from M groups of constellation points in an I-Q space to an alphabet of M pilot symbols, wherein each of the M groups comprises N constellation points; and generate a stream of quantum key distribution (QKD) symbols from the stream of samples, in accordance with an M-to-one mapping from a set of M*N constellation points of the M groups to an alphabet of N QKD symbols, wherein the M-to-one mapping from the set of M*N constellation points to the alphabet of N QKD symbols comprises, for each respective group of the M groups, a one-to-one mapping from the N constellation points of the respective group to the alphabet of N QKD symbols.

According to embodiments of the present invention, any two constellation points of a same group among the M groups are closer to each other than any two constellation points of two different groups.

According to embodiments of the present invention, the apparatus may be configured to perform carrier phase-and-frequency correction based on the pilot symbols.

According to embodiments of the present invention, generating the stream of QKD symbols comprises, for each sample of the stream of samples: (*option 1*) equalizing the sample and shifting the equalized sample in the I-Q plane by subtracting a pilot offset from the equalized sample, or (*option 2*) shifting the sample in the I-Q plane by subtracting a pilot offset from the sample and equalizing the shifted sample.

According to embodiments of the present invention, the apparatus may be configured to generate a QKD data stream by performing forward error correction (FEC) decoding on the stream of QKD symbols.

According to embodiments of the present invention, the apparatus may be configured to respond to the stream of QKD symbols in accordance with a QKD protocol that specifies communication between Alice and Bob.

According to embodiments of the present invention, M is at least 2, preferably at least 4, and N is at least 2, preferably at least 16, and most preferably at least 64.

According to embodiments of the present invention, the received signal is an optical signal.

According to embodiments of the present invention, the equalizing can be format-aware equalization.

According to embodiments of the present invention, each pilot symbol is modulated using simple modulation, preferably quadrature phase shift keying (QPSK), and each QKD symbol is modulated using a discrete Gaussian modulation format, preferably probabilistic constellation shaped quadrature amplitude modulation (PCS-QAM).

According to embodiments of the present invention, apparatus is provided comprising processing circuitry configured to generate a stream of samples for driving a transmitter, each sample having an in-phase (I) component and a quadrature (Q) component. The stream of samples is generated from a stream of pilot symbols and a stream of QKD symbols, wherein the pilot symbols belong to an alphabet of M pilot symbols and the QKD symbols belong to an alphabet of N QKD symbols. The apparatus is configured to map a pilot symbol of the stream of pilot symbols to a group of constellation points in accordance with a one-to-one mapping from the alphabet of M pilot symbols to M groups of constellation points in an I-Q space, wherein each of the M groups comprises N constellation points. The apparatus is configured to map a QKD symbol of the stream of QKD symbols to a constellation point in the I-Q space in accordance with a one-to-one mapping from the alphabet of N QKD symbols to the N constellation points of the group of constellation points to which the pilot symbol is mapped.

According to embodiments of the present invention, any two constellation points of a same group among the M groups are closer to each other than any two constellation points of two different groups.

According to embodiments of the present invention, the apparatus may be configured to perform quantum state preparation and stabilization of the stream of samples.

According to embodiments of the present invention, the apparatus may be configured to perform encoding the QKD data stream by performing error correction code on the stream of QKD symbols.

According to embodiments of the present invention, the apparatus may be configured to perform transmitting the stream of QKD symbols in accordance with a QKD protocol that specifies communication between Alice and Bob.

According to embodiments of the present invention, the transmitter transmits a signal, preferably an optical signal.

According to embodiments of the present invention, the pilot symbol is modulated using simple modulation, preferably quadrature phase shift keying (QPSK), and the QKD symbol is modulated using a discrete Gaussian modulation format, preferably probabilistic constellation shaped quadrature amplitude modulation (PCS-QAM).

According to embodiments of the present invention, the stream of samples can be described by the following formula:

$$s_{PowDM} = \sqrt{p_{pilot}} \times x_{pilot} + \sqrt{p_{quantum}} \times x_{quantum},$$

wherein $p_{pilot}$ is the power of the pilot symbol, $p_{quantum}$ is the power of the QKD symbol, $x_{pilot}$ is the M groups of constellation points, $x_{quantum}$ is the set of N constellation points, and $s_{PowDM}$ is the stream of samples.

According to embodiments of the present invention, the pilot signal is modulated with simple modulation and the quantum signal is modulated with discrete Gaussian modulation.

According to embodiments of the present invention, the pilot signal is modulated with quadrature phase shift keying (QPSK).

According to embodiments of the present invention, the quantum signal is modulated with probabilistic constellation shaped quadrature amplitude modulation (PCS-QAM).

According to embodiments of the present invention, the signal is produced using digital signal processing prior to physical layer manipulation.

According to embodiments of the present invention, there is provided a computer program product configured to cause a method in accordance with at least one of the first and second aspects to be performed.

Other aspects in accordance with the invention will become apparent from the following detailed description, taken in conjunction with the accompanying drawings, illustrated by way of example of the principles of the invention.

## DESCRIPTION OF DRAWINGS

Embodiments of the present invention are illustrated by way of example with reference to the accompanying drawings figures (FIGS. or FIGS.), which should not be construed to limit the present disclosure.

FIG. 1(a) illustrates first scheme for transmitting a signal using a local oscillator (LO) at the transmitter side (Alice);

FIG. 1(b) illustrates a second scheme for receiving a signal using a separate laser LO (LLO) local to the receiver (Bob);

FIG. 1(c) illustrates quantum signal and pilot multiplexing for the scheme of FIG. 1(b);

FIG. 2(a) illustrate the implementation process of producing a PowDM overlap signal for a QKD system according to embodiments of the present invention;

FIG. 2(b) illustrates a block diagram of a scheme for transmitting the PowDM overlap signal between Alice and Bob;

FIG. 3(a) is a block diagram of DSP processes for a PowDM scheme according to a first aspect of the present invention;

FIG. 3(b) is a block diagram of the DSP processes for a PowDM scheme according to a second aspect of the present invention;

FIG. 4(a) is a graph illustrating signal-to-noise ratio (SNR) versus received signal power performance comparisons between the conventional TDM scheme and the invented PowDM scheme according to embodiments of the present invention; and

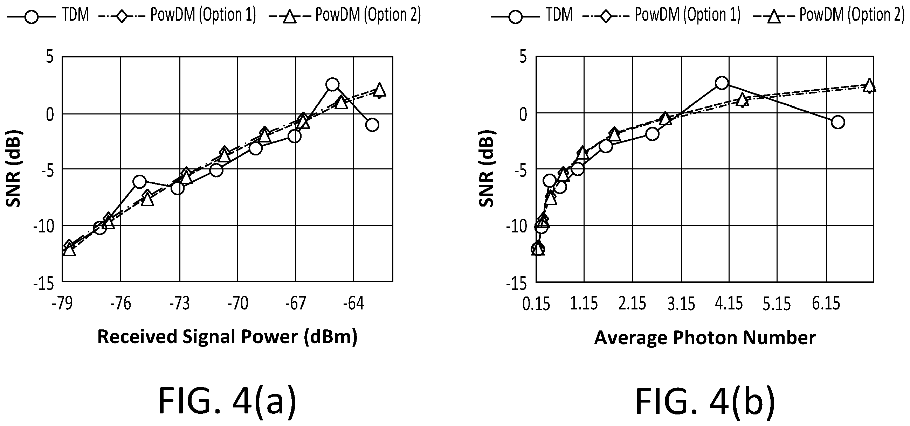

FIG. 4(a) is a graph illustrating SNR versus average photon number performance comparisons between the conventional TDM scheme and the invented PowDM scheme according to embodiments of the present invention.

## DETAILED DESCRIPTION

The following descriptions are presented to enable any person skilled in the art to create and use apparatuses, systems and methods described herein.

It will be readily understood that the components of the embodiments as generally described herein and illustrated in the appended figures could be arranged and designed in a wide variety of different configurations. Thus, the following more detailed description of various embodiments, as represented in the figures, is not intended to limit the scope of the present disclosure, but is merely representative of various embodiments. While the various aspects of the embodiments are presented in drawings, the drawings are not necessarily drawn to scale unless specifically indicated.

Reference throughout this specification to "one embodiment," "an embodiment," or similar language means that a particular feature, structure, or characteristic described in connection with the indicated embodiment is included in at least one embodiment of the present invention. Thus, the phrases "in one embodiment," "in an embodiment," and similar language throughout this specification may, but do not necessarily, all refer to the same embodiment.

Throughout this document, reference is made to both "signals" and "symbols." The skilled person will understand that a signal is a continuous physical transmission that carries information. In quantum communications, a signal can be a continuous stream of quantum states, such as the polarization states of photons. A symbol is a representation of a discrete bit or multiple bits of information. A symbol can be a single quantum state or a sequence of quantum states used to represent one or more bits of information. A stream of symbols refers to a sequence of symbols transmitted over time to convey information or data. For convenience, the term signal may be used herein to refer to a symbol or a stream of symbols.

CV-QKD that uses coherent states requires only standard coherent optical technologies for implementation. Using coherent detection, a reference signal with a much higher power, termed as local oscillator (LO), is required to interfere with the weak quantum signal for its detection.

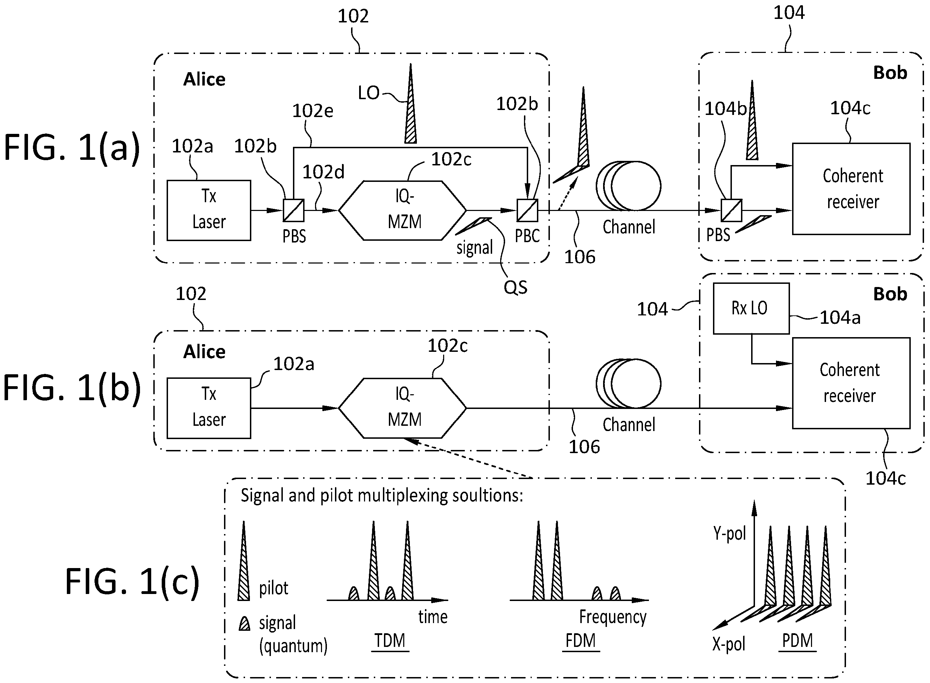

FIG. 1(a) is a block diagram illustrating one way of transmitting CV-QKD communications referred to as the transmitted/remote LO scheme. As shown, a transmitter side (Alice) 102 is coupled with a receiver side (Bob) 104 via a communication link 106 having one or more channels. Alice 102 includes a transmit laser (Tx) 102a, which may be a constant wave laser, input into a polarizing beam splitter (PBS) 102b, which splits the power of laser light into two orthogonal polarizations 102d, 102e. The light in one polarization 102d is input into a modulator (IQ-MZM) 102c used for the modulation of quantum signals (Q). As an example, an IQ-MZM may include two Mach-Zehnder interferometers, one for the in-phase (I) and the other for the quadrature-phase (qs) signals. The other beam path 102e from PBS 102b serves as the local oscillator (LO).

The modulated output qs and the LO are combined with a polarization beam combiner (PBC) 102f before launching into the channel of the communication link 106. At Bob's end 104, a PBS 104b separates the quantum signal (qs) from the LO and inputs them into a coherent receiver 104c for physical layer signal recovery using known coherent detection methods. The signal is then transferred to digital signal processing circuitry (not shown) for to process the received signal and extract the transmitted data.

In this scheme, the carrier of the quantum signal (qs) and the LO share the same frequency, and their phase differences are negligible, which minimizes the excess noise induced by the imperfect carrier recovery of the quantum signal. However, this transmitted/remote LO scheme results in crosstalk between the quantum signal (qq) and the LO during channel propagation, which inevitably contributes to the increase in excess noise. More importantly, security loopholes may exist with this scheme since the LO, which determines noise calibration in CV-QKD, is also exposed over the communication link 106 to the Eve, meaning that Eve can potentially manipulate the LO.

To avoid this issue, an alternative way is to use a separate laser to generate the LO at the receiver (i.e., Bob's site), which is referred to as the 'local' LO (LLO) scheme. The corresponding system diagram is shown in FIG. 1(b).

In the LLO scheme as shown, the light from the transmit laser 102a is not split. A second free running laser 104a is added to the receiving side (Bob) and input into the coherent receiver 104c as a reference. Realizing robust and accurate carrier recovery is more challenging because two free-running lasers are used for the quantum signal and the LO, respectively. Given that a quantum signal is too weak to be reliably recovered, auxiliary or reference signals with a higher power, i.e. the pilot, are multiplexed with the quantum signal for this purpose by the IQ-MZM multiplexer 102c.

As shown in FIG. 1(c), time-/frequency-/polarization-division multiplexing (TDM/FDM/PDM) can be performed on the pilot signal and quantum signal, through which both signals share the same optical carrier and experience the same channel propagation effect (i.e., exhibit a fixed phase and frequency relation). As shown, the pilot signal is much larger than the quantum signal in amplitude. At the receiver, carrier recovery algorithms can be applied to the multiplexed pilot by the coherent receiver 104c in order to estimate the carrier phase and frequency by which the quantum signal can be recovered.

As illustrated in FIG. 1(c), each multiplexing scheme (TDM, FDM, PDM) reduces the channel slots available in the carrier channel that can be used for transmission of the quantum signal. Instead of multiplexing the pilot and quantum signal in the time/frequency/polarization domain, the present invention implements the pilot multiplexing in a novel dimension, the power domain.

At the receiver side (Bob), the received overlapped signal (i.e., pilot plus quantum signal) can be treated only as the pilot signal when performing the polarization demultiplexing and carrier recovery. Given that a pilot can use simple modulation (e.g., quadrature phase shift keying (QPSK)), which also exhibits a higher power relative to the quantum signal, the overlapped signal can be robustly and reliably recovered. After this, the desired quantum signal can be extracted by subtracting the pilot from the recovered overlapped signal, even though its optical power (and thus signal-to-noise ratio, SNR) may be extremely low.

In this regard, there will be no efficiency sacrifice regarding time/frequency/polarization in the invented PowDM-based CV-QKD system. This leads to 100% increase in the secret key rate, without introducing any extra hardware to the system.

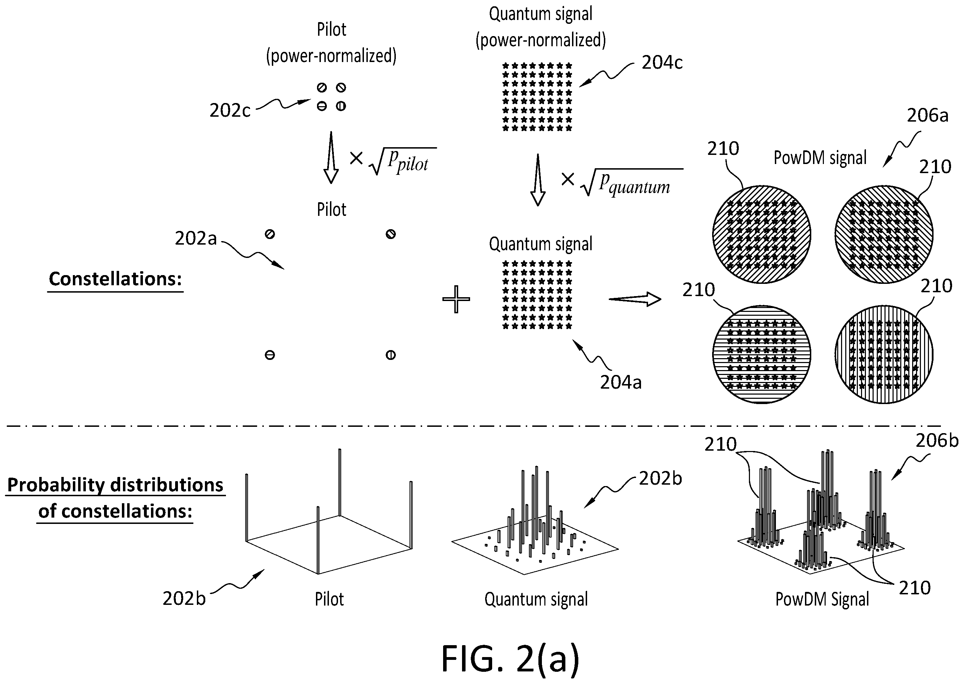

An implementation of the proposed PowDM scheme for the pilot and quantum signal is illustrated in FIGS. 2(a)-(b) according to embodiments of the present invention. In principle, the scheme should not impose any limitation on the usable modulation format for the pilot and quantum signal, and arbitrary formats can be adopted to pair with the security proof of the CV-QKD system.

For the purposes of illustrating its implementation, in FIGS. 2(a)-(b), it is assumed that the pilot adopts simple modulation, such as QPSK modulation, while the quantum may be modulated using a discrete Gaussian modulation format, for example as shown, probabilistic constellation shaped quadrature amplitude modulation (PCS-QAM). QPSK is an example of a modulation scheme for the pilot, but other known schemes are possible, such as BPSK. The skilled person will understand to utilize a scheme suited to make sure the pilot is recoverable.

Likewise, although PCS-QAM is used as an example for modulation of the quantum signal, the skilled person will understand that other schemes could be utilized. The skilled person will understand to utilize a scheme suited to optimize recovery of the much lower power quantum signal. Gaussian schemes are preferred for their combination of energy efficiency, high key rates, and compatibility with classical communications.

As mentioned, the pilot signal exhibits a higher power than that of the quantum signal. In this example, the power difference is 16 dB, but the skilled person will understand that the optimum value may vary from system to system.

FIG. 2(a) illustrates the constellation probabilities of the pilot 202a, quantum 204a and combined PowDM 206a signals on top. Each star 208 represents the constellation space of resulting PCS signal, that is, the probability of a PCS symbol being present. For some points the probability is zero - so there are no stars shown.

According to embodiments of the invention, the power domain multiplexing can be conducted purely by digital signal processing (DSP). For instance, at the transmitter (i.e., Alice's site), the quantum signal may be overlapped with the pilot in the power domain. That is, two complex data streams, information symbols, can be directly summed. The resulting power-division multiplexed (PowDM) signal, which is an overlap signal combining both the pilot and the quantum, can then use to drive the modulator in the LLO scheme to simultaneously generate the quantum signal and pilot using a single optical carrier without using separate slots for the pilot.

On the bottom of FIG. 2(a) is illustrated the bottom the power and distribution points for the pilot 202b, quantum 204b, and overlap PowDM 206b signals. Power amplitude is shown in the Y direction. As can be seen, the combined signal 206b exemplifies the sum of the pilot symbols 202b with the quantum symbols 204b, with the quantum symbols 204b being mapped into pilot groups 210. This is just an example, and the pilot symbols could be mapped into quantum groups as well.

The PowDM process can be described by the following formula:

$$S_{PowDM} = \sqrt{p_{pilot}} \times x_{pilot} + \sqrt{p_{quantum}} \times x_{quantum} \, ,$$

wherein $p_{pilot}$ and $p_{quantum}$ are the powers of the pilot and quantum symbols, respectively. $x_{pilot}$ and $x_{quantum}$ denote the pilot and quantum constellations, respectively. $s_{PowDM}$ is the overlapped symbol after the PowDM process.

As shown, a power normalized pilot symbol 202c can be multiplexed with simple modulation, such as, e.g., QPSK, multiplied by the square root of its power to generate the probability distribution of its constellation 202b. Likewise, the power-normalized quantum symbol 204c is multiplied by the square root of its power to generate the probability distribution of its constellation 204b. The pilot symbol and quantum symbol are summed to form the resulting overlap PowDM symbol 206b. As illustrated, the quantum symbol 204a may be mapped onto the pilot symbols to form pilot groups 210.

Although modulation is described herein as PowDM, modulation of the pilot and quantum signals can be accomplished with complex modulations, such as, for example, quadrature-amplitude modulation (QAM). In principle, other types of constellations can be used as well, for example, amplitude and phase-shift keying (APSK) and phase-shift keying (PSK).

Embodiments of the invention may use a QAM constellation, i.e. a QAM alphabet, i.e. a set of QAM symbols or IQ coordinates in the IQ plane. I = amplitude of the cosine wave; Q = amplitude of the sine wave; the modulated optical signal has the following amplitude during a given time slot:

$$A(t) = I*cos(omega*t) + Q*sin(omega*t) \text{ where } omega=2*pi*nu,$$

nu is the optical frequency, t is the time, and I and Q are the coordinates of the symbol transmitted in the given time slot.

The QAM constellation (or "alphabet") is divided into M groups ("pilot groups") 210, each pilot group 210 consisting of N adjacent QAM symbols (stars 208) (e.g. N=64). The constellation thus comprises M*N symbols. Each of the M pilot groups 210 maps to (or represents) one of M pilot symbols. There are N different QKD symbols (QKD data symbols or data symbols), which can be thought of as another set of abstract symbols, unrelated to the pilot symbols and not necessarily related to the IQ plane.

At the most abstract level, there is a one-to-one mapping (defined individually for each respective pilot group) which maps the N QAM symbols of a pilot group into N QKD symbols. In other words, each of the M*N QAM symbols in the IQ plane maps to one of the N QKD symbols. The mapping between the N QAM symbols in a pilot group should be defined individually for each pilot group, although various implementation forms of the mapping can be used.

As illustrated, the N QAM symbols of a pilot group can be mapped into N QKD symbols as illustrated. Other mappings can, in principle, can be implemented. For example, the mapping could be defined by a translation followed by a rotation of the pilot group (or a rotation followed by a translation). As another example, one could use M look-up-tables (one LUT per pilot group) that indicates, for each of the N QAM symbols in respective pilot group, one of the N QKD symbols.

Recovering a QKD symbol from a detected QAM symbol does not necessarily require subtracting an amplitude of the pilot from the detected QAM symbol. Instead, one can detect a QAM symbol (one of the M*N QAM symbols) and (by some agreed mapping) determine a QKD symbol that is represented by the detected QKD symbol.

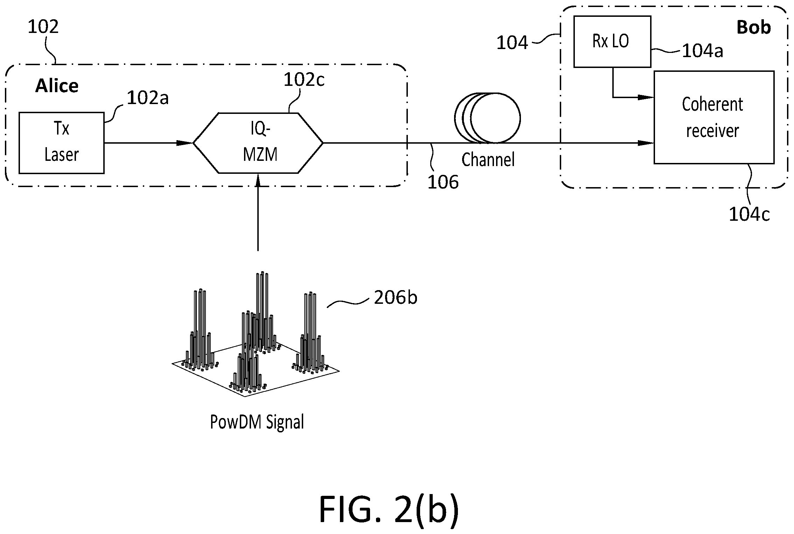

FIG. 2(b) is a simple block diagram similar to FIG. 1(b) illustrating transmission of the overlap PowDM signal (i.e., M*N symbols) according to embodiments of the present invention. As shown, no additional components are required at either Alice 102 or Bob 104. The overlap PowDM symbol 206 output from DSP circuitry, which is really a steam of symbols, and is used to drive the modulator 102c to generate the combine overlap signal. Thus, additional slots (time/frequency/-phase) are not required for the pilot and the quantum signal rate is not diminished.

The resulting overlap signal can basically be treated solely as a pilot signal when the power ratio between the pilot and quantum signal (i.e., pilot symbols and QKD symbols) is large. This is inherently true for the case of CV-QKD as the quantum signal has to be attenuated typically to the level of a few photons. Therefore, the pilot signal will have much more power than the quantum signal.

At the transmitting side (Alice), the resulting overlap signal can also be further processed (e.g., by pulse shaping for enhanced spectral efficiency) before been sent to the digital-to-analog converter for analog signal generation. This is similar to non-orthogonal multiple access adopted in the radio frequency wireless communications to incorporate multiple users on a non-orthogonal basis (e.g., the power domain). However, it is a fundamentally different concept compared to this invention. Non-orthogonal multiple access mainly targets increasing the number of supported users and improving the spectral efficiency of the system. In contrast, the present invention uses the PowDM pilot to reliably recover the quantum signals without sacrificing any time/frequency/polarization resources of the quantum system (and as such, increase the secret key rate).

The process of the present invention is independent of polarization, and hence two independent parallel processes can be performed in the case of dual polarizations. The analog signal can then be used to drive the modulator to simultaneously generate the pilot and quantum signal using the same optical carrier (for either single- or dual-polarization).

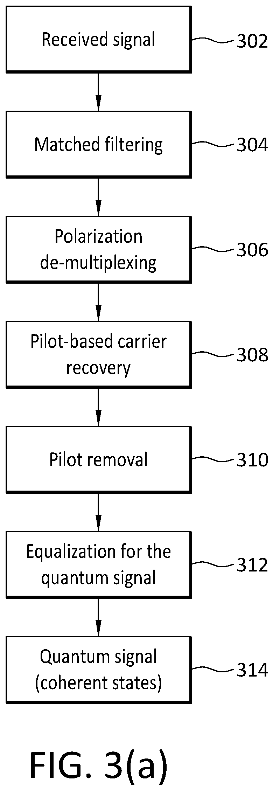

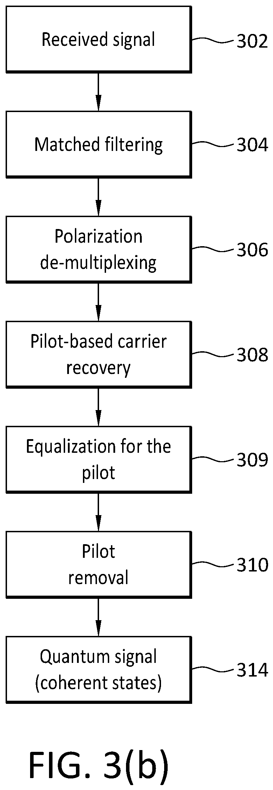

The DSP processes at the receiver (Bob's site) for the proposed PowDM scheme are outlined in FIGS. 3(a) and 3(b), according to embodiments of the present invention.

Referring to FIG. 3(a), a first aspect of the receiver side processing is shown. First, at step 302, the signal is received (e.g., in the coherent receiver at Bob. Next, at step 304, matched filtering will be performed (if pulse shaping is performed at the transmitter). At step 306, polarization de-multiplexing is performed thereon in the case of dual polarizations. Subsequently, at step 308, pilot-based carrier recovery (including both phase and frequency) is conduced.

Note that in the polarization de-multiplexing 306 and carrier recovery stages 308, the PowDM signal is treated solely as the pilot, which uses very simple modulation (e.g., QPSK). This means that DSP algorithms with low complexities can be adopted without sacrificing the performance of the signal recovery. For example, polarization de-multiplexing can be achieved simply by adopting the constant modulus algorithm.

After carrier recovery, there are at least two options to obtain the final quantum signal (i.e., complex coherent states). According to the first aspect of the invention, at step 310, the quantum signal is extracted from the PowDM signal by subtracting the pilot from the PowDM signal. After this, at step 312, customized equalization for the quantum signal (i.e., format-aware equalization) can be applied to obtain the final quantum signal (314).

FIG. 3(b) illustrates a second aspect of the invention. As shown in FIG. 3(b), the first four steps 302-308 are the same as in the first aspect. However, according to the second aspect, after pilot recovery, the overlapped PowDM signal is continued to be treated as the pilot only. That is, the quantum signal at this stage is taken as noise. At step 309, the recovered signal is equalized using simple equalization dedicated to the pilot (e.g., equalization for QPSK). Thereafter, at step 310, pilot removal is conducted to obtain the final quantum signal (314). Thus, in the second aspect of the invention, the complexity of the equalization stage can be significantly lower than that of the first.

Although FIGS. 3(a) and (b) both include pilot removal to obtain the final quantum signal, as described above, recovering a QKD symbol from a detected QAM symbol does not necessarily require subtracting an amplitude of the pilot from the detected QAM symbol. Thus, according to certain embodiments, one could detect a QAM symbol without pilot removal. For example, a predetermined mapping could be used to determine a QKD symbol that is represented by the detected QKD symbol.

The present invention achieves a number of advantages over the prior art, which should be recognized by the skilled person in the art. Non-limiting examples include:

As should be obvious, the present invention has the ability to achieve significantly higher secret key rates and/or longer transmission ranges for CV-QKD systems.

The present invention can be adapted to single-polarization and dual-polarization CV-QKD systems, as well as both single-quadrature (i.e., homodyne) and dual-quadrature (i.e., heterodyne) receiver architectures.

No additional communications hardware is needed to implement the present invention. The present invention relies solely on DSP, which also exhibits lower implementation complexity relative to the conventional solutions (e.g., TDM). Thus, existing conventional technology can be adapted to implement the present invention without the need for additional hardware components.

The present invention is applicable to different CV-QKD security protocols, in which different modulation formats can be adopted for the quantum signal.

To illustrate the effectiveness of the present invention, a comparison study between the conventional TDM scheme (with 50% time slots allocated to the pilot) and the invented PowDM scheme was conducted. Results of the study are illustrated in FIGS. 4(a)-(b).

In the study, the pilot was modulated with the QPSK format and the quantum signal was modulated using the discrete Gaussian modulated PCS-QAM format. The power ratio between the pilot and quantum signal in both cases was 16 dB.

FIG. 4(a) is a graph of the measured SNR versus received signal power for both the TDM scheme and the invented PowDM scheme. FIG. 4(b) is a graph of the measured SNR versus average photon number for both the TDM scheme and the invented PowDM scheme for both the first and second aspects of the invention. In both figures, the TDM scheme is illustrated with a line with ovals for measured point, the first aspect of the invention is shown with a line with diamonds for the measured points, and the second aspect of the invention is shown with a line with triangles for the measured points. As shown, the first and second aspects of the invention achieved nearly identical results.

The skilled person would understand, as shown by the results of the study, that the PowDM scheme allows for recovery of the quantum signal at very low powers (e.g., below 1 photon per symbol), despite the corresponding SNR being lower than -10 dB. More importantly, when compared to the conventional TDM scheme, similar or even better SNR performance was achieved by the PowDM scheme using either aspect of the invention the receiver DSP. This demonstrates that the invented PowDM scheme provides the ability to recover the quantum signal robustly and reliably, even when the received signal power (and thus the SNR) is extremely low. As a result, the corresponding secret key rate of the CV-QKD system using the invented PowDM scheme can be doubled, when compared to the system using the conventional TDM scheme.

The skilled person will understand that the either the first aspect or the second aspect of the invention will achieve similar results. It will be recognized, however, that depending on the implementation, one of the approaches may be more optimum than the other. Therefore, it is contemplated that certain embodiments of the invention may provide for both, wherein the process is selected to optimize recovery of the quantum signal. The selection could be static (e.g., preselected based on configuration or other parameters) or dynamic.

The skilled person will understand that digital signal processing (DSP) circuitry for performing the invented processes described herein may be embodied solely in hardware or firmware, or a combination of hardware, firmware and/or software, and should include suitable memory and processor(s) for performing the invented processes.

Although the operations of the method(s) herein are shown and described in a particular order, the order of the operations of each method may be altered so that certain operations may be performed in an inverse order or so that certain operations may be performed, at least in part, concurrently with other operations. In another embodiment, instructions or sub-operations of distinct operations may be implemented in an intermittent and/or alternating manner.

It should also be noted that at least some of the operations for the methods described herein may be implemented using software instructions stored on a computer useable storage medium for execution by a computer. As an example, an embodiment of a computer program product includes a computer useable storage medium to store a computer readable program.

The computer-useable or computer-readable storage medium can be an electronic, magnetic, optical, electromagnetic, infrared, or semiconductor system (or apparatus or device). Examples of non-transitory computer-useable and computer-readable storage media include a semiconductor or solid-state memory, magnetic tape, a removable computer diskette, a random-access memory (RAM), a read-only memory (ROM), a rigid magnetic disk, and an optical disk. Current examples of optical disks include a compact disk with read only memory (CD-ROM), a compact disk with read/write (CD-R/W), and a digital video disk (DVD).

Alternatively, embodiments of the invention may be implemented entirely in hardware or in an implementation containing both hardware and software elements. In embodiments which use software, the software may include but is not limited to firmware, resident software, microcode, etc.

Although specific embodiments of the invention have been described and illustrated, the invention is not to be limited to the specific forms or arrangements of parts so described and illustrated. The scope of the invention is to be defined by the claims appended hereto and their equivalents.

### List of abbreviations

The following abbreviations were used herein and have the following meanings except as modified herein. Widely established and unique abbreviations can be assumed as known.

| | |
|---|---|
| QKD: | Quantum Key Distribution |
| Eve: | eavesdropper |
| CV-QKD: | Continuous-Variable Quantum Key Distribution |
| DV-QKD: | Discrete-Variable Quantum Key Distribution |
| PCS: | Probabilistic Constellation Shaping |
| Rx: | Receiver |
| LO: | Local Oscillator |
| Tx: | Transmitter |
| PBS: | Polarization Beam Splitter |
| PBC: | Polarization Beam Combiner |
| LLO: | Local Local Oscillator |
| TDM: | Time-Division Multiplexing |
| FDM: | Frequency-Division Multiplexing |
| PDM: | Polarization-Division Multiplexing |
| DSP: | Digital Signal Processing |
| PowDM: | Power-Division Multiplexing |
| QPSK: | Quadrature Phase Shift Keying |
| SNR: | Signal-to-Noise Ratio |
| PCS-QAM: | Probabilistic Constellation Shaped Quadrature Amplitude Modulation |

### Claims

1. A method comprising:

    obtaining a stream of samples, the stream of samples representing a component of a received signal, each sample having an in-phase (I) component and a quadrature (Q) component;
    generating a stream of pilot symbols from the stream of samples in accordance with a one-to-one mapping from M groups of constellation points in an I-Q space to an alphabet of M pilot symbols, wherein each of the M groups comprises N constellation points; and

generating a stream of quantum key distribution (QKD) symbols from the stream of samples in accordance with an M-to-one mapping from a set of M*N constellation points of the M groups to an alphabet of N QKD symbols, wherein the M-to-one mapping from the set of M*N constellation points to the alphabet of N QKD symbols comprises, for each respective group of the M groups, a one-to-one mapping from the N constellation points of the respective group to the alphabet of N QKD symbols.

2. The method of claim 1, wherein any two constellation points of a same group among the M groups are closer to each other than any two constellation points of two different groups among the M groups.

3. A method comprising:

generating a stream of samples for driving a transmitter, each sample having an in-phase (I) component and a quadrature (Q) component,

wherein the stream of samples is generated from a stream of pilot symbols and a stream of QKD symbols, wherein the pilot symbols belong to an alphabet of M pilot symbols and the QKD symbols belong to an alphabet of N QKD symbols;

mapping a pilot symbol of the stream of pilot symbols to a group of constellation points in accordance with a one-to-one mapping from the alphabet of M pilot symbols to M groups of constellation points in an I-Q space, wherein each of the M groups comprises N constellation points; and

mapping a QKD symbol of the stream of QKD symbols to a constellation point in the I-Q space in accordance with a one-to-one mapping from the alphabet of N QKD symbols to the N constellation points of the group of constellation points to which the pilot symbol is mapped.

4. The method of claim 3, wherein any two constellation points of a same group among the M groups are closer to each other than any two constellation points of two different groups among the M groups.

5. A signal having an in-phase (I) component and a quadrature (Q) component, wherein the I component and the Q component have been generated based on the stream of samples generated according to the method of claim 3 or 4.

6. An apparatus comprising processing circuitry configured to:

obtain a stream of samples, the stream of samples representing a component of a received signal, each sample having an in-phase (I) component and a quadrature (Q) component;

generate a stream of pilot symbols from the stream of samples in accordance with a one-to-one mapping from M groups of constellation points in an I-Q space to an alphabet of M pilot symbols, wherein each of the M groups comprises N constellation points; and

generate a stream of quantum key distribution (QKD) symbols from the stream of samples in accordance with an M-to-one mapping from a set of M*N constellation points of the M groups to an alphabet of N QKD symbols, wherein the M-to-one mapping from the set of M*N constellation points to the alphabet of N QKD symbols comprises, for each respective group of the M groups, a one-to-one mapping from the N constellation points of the respective group to the alphabet of N QKD symbols.

7. The apparatus of claim 6, wherein any two constellation points of a same group among the M groups are closer to each other than any two constellation points of two different groups.

8. The apparatus of claim 6 or 7, further configured to perform carrier phase-and-frequency correction based on the pilot symbols.

9. The apparatus of any one of claims 6 to 8, wherein generating the stream of QKD symbols comprises, for each sample of the stream of samples:

equalizing the sample and shifting the equalized sample in the I-Q plane by subtracting a pilot offset from the equalized sample; or

shifting the sample in the I-Q plane by subtracting a pilot offset from the sample and equalizing the shifted sample.

10. The apparatus of any one of claims 6 to 9, further configured to generate a QKD data stream by performing forward error correction (FEC) decoding on the stream of QKD symbols.

11. The apparatus of claim 10, further configured to respond to the QKD data stream in accordance with a QKD protocol.

12. The apparatus of any one of claims 6 to 11, wherein M is at least 2, preferably at least 4, and N is at least 2, preferably at least 16, and more preferably at least 64.

13. The apparatus of any one of claims 6 to 12, wherein the received signal is an optical signal.

14. An apparatus comprising processing circuitry configured to:

generate a stream of samples for driving a transmitter, each sample having an in-phase (I) component and a quadrature (Q) component,
wherein the stream of samples is generated from a stream of pilot symbols and a stream of QKD symbols, wherein the pilot symbols belong to an alphabet of M pilot symbols and the QKD symbols belong to an alphabet of N QKD symbols;
map a pilot symbol of the stream of pilot symbols to a group of constellation points in accordance with a one-to-one mapping from the alphabet of M pilot symbols to M groups of constellation points in an I-Q space, wherein each of the M groups comprises N constellation points; and
map a QKD symbol of the stream of QKD symbols to a constellation point in the I-Q space in accordance with a one-to-one mapping from the alphabet of N QKD symbols to the N constellation points of the group of constellation points to which the pilot symbol is mapped.

15. The apparatus of claim 14, wherein any two constellation points of a same group among the M groups are closer to each other than any two constellation points of two different groups.

16. The apparatus of claim 14 or 15, further configured to perform quantum state preparation and stabilization of the stream of samples.

17. The apparatus of any one of claims 14 to 16, further configured to generate the stream of QKD symbols by performing forward error correction (FEC) encoding on a QKD data stream.

18. The apparatus of claim 17, further configured to transmit the stream of QKD symbols in accordance with a QKD protocol.

19. The apparatus of any one of claims 14 to 18, wherein the transmitter is configured to transmit a signal, preferably an optical signal, comprising the stream of samples.

20. The apparatus of any of claims 14 to 19, configured to modulate the pilot symbol using simple modulation, preferably quadrature phase shift keying (QPSK), and modulate the QKD symbol using a discrete Gaussian modulation format, preferably probabilistic constellation shaped quadrature amplitude modulation (PCS-QAM).

FIG. 1(a)

FIG. 1(b)

FIG. 1(c)

EP 4 641 951 A1

FIG. 2(a)

FIG. 2(b)

EP 4 641 951 A1

```
┌─────────────────────┐
│   Received signal   │────302
└─────────────────────┘
           │
           ▼
┌─────────────────────┐
│  Matched filtering  │────304
└─────────────────────┘
           │
           ▼
┌─────────────────────┐
│    Polarization     │
│   de-multiplexing   │────306
└─────────────────────┘
           │
           ▼
┌─────────────────────┐
│ Pilot-based carrier │
│      recovery       │────308
└─────────────────────┘
           │
           ▼
┌─────────────────────┐
│    Pilot removal    │────310
└─────────────────────┘
           │
           ▼
┌─────────────────────┐
│  Equalization for the │
│    quantum signal   │────312
└─────────────────────┘
           │
           ▼
┌─────────────────────┐
│   Quantum signal    │
│  (coherent states)  │────314
└─────────────────────┘
```

FIG. 3(a)

Received signal — 302

Matched filtering — 304

Polarization de-multiplexing — 306

Pilot-based carrier recovery — 308

Equalization for the pilot — 309

Pilot removal — 310

Quantum signal (coherent states) — 314

# FIG. 3(b)

—O— TDM   —◇—  PowDM (Option 1)   —△—  PowDM (Option 2)

—O— TDM   —◇—  PowDM (Option 1)   —△—  PowDM (Option 2)

FIG. 4(a)

FIG. 4(b)

Europäisches
Patentamt

European
Patent Office

Office européen
des brevets

## EUROPEAN SEARCH REPORT

**Application Number**

EP 24 30 5644

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 037 248 A1 (NOKIA SOLUTIONS & NETWORKS OY [FI]) 3 August 2022 (2022-08-03) * paragraphs [0063], [0065], [0067] * | 1-20 | INV. H04B10/70 H04L9/08 H04L27/34 |
| X | YANG CAN ET AL: "A Hierarchical Modulation Coherent Communication Scheme for Simultaneous Four-State Continuous-Variable Quantum Key Distribution and Classical Communication", INTERNATIONAL JOURNAL OF THEORETICAL PHYSICS, PLENUM PRESS, NEW YORK, NY, US, vol. 57, no. 9, 11 June 2018 (2018-06-11), pages 2775-2786, XP036566195, ISSN: 0020-7748, DOI: 10.1007/S10773-018-3798-Z [retrieved on 2018-06-11] | 5 | |
| A | * sections 1 and 2 *; figure 1 | 1-4,6-20 | |
| A | IIYAMA NORIKO ET AL: "Application of hierarchical modulation to optical access network", 2014 12TH INTERNATIONAL CONFERENCE ON OPTICAL INTERNET 2014 (COIN), IEEE, 27 August 2014 (2014-08-27), pages 1-2, XP032678140, DOI: 10.1109/COIN.2014.6950525 [retrieved on 2014-11-07] * section II.A *; figure 1 | 1-20 | **TECHNICAL FIELDS SEARCHED (IPC)** H04B H04L |

The present search report has been drawn up for all claims

| Place of search | Date of completion of the search | Examiner |
|---|---|---|
| Munich | 1 October 2024 | Agudo Cortada, E |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 30 5644

This annex lists the patent family members relating to the patent documents cited in the above-mentioned European search report.
The members are as contained in the European Patent Office EDP file on
The European Patent Office is in no way liable for these particulars which are merely given for the purpose of information.

01-10-2024

| Patent document cited in search report | Publication date | Patent family member(s) | Publication date |
|---|---|---|---|
| EP 4037248 A1 | 03-08-2022 | NONE | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ROUMESTAN et al.** Demonstration of Probabilistic Constellation Shaping for Continuous Variable Quantum Key Distribution. *Optical Fiber Communications Conference and Exhibition (OFC)*, 2021